# EUROPEAN PATENT SPECIFICATION

(11) **EP 1 494 063 B1**
(45) Date of publication and mention of the grant of the patent: **10.08.2005**
(21) Application number: 03360072.7
(22) Date of filing: 16.06.2003
(51) Int. Cl.: G02F 1/01

(54) **Electro-optical absorption modulator comprising a limiter for the driving signal**
Elektro-optischer Absorptionsmodulator mit Begrenzer für das Steuersignal
Modulateur d'absorption électrooptique ayant un limiteur de signal de commande

(43) Date of publication of application: 05.01.2005
(73) Proprietor: ALCATEL, 75008 Paris (FR)
(72) Inventor: Junginger Bernhard, 71229 Leonberg (DE); Schuh, Karsten, 70188, Stuggart (DE); Lach Dr., Eugen, 71672 Marbach (DE)

(56) References cited:
- EP-A- 0 810 462
- US-A- 5 889 607
- US-A1- 2002 018 280

## Description

The present invention relates to an electro-optical element for generating an amplitude-modulated optical signal, in particular an electro-absorption modulator, comprising a semiconductor substrate, an electro-optical modulation structure which is arranged on the substrate and which has a first terminal for supplying an optical signal to be modulated, a second terminal for supplying an electrical modulation signal, and a modulation area adapted for modulating the optical signal with the electrical modulation signal, and a limiter for limiting the electrical modulation signal, said limiter being operatively connected between the second terminal and the modulation area.

Such an electro-optical element is disclosed by US 2002/0018280 Al.

Optical communication networks gain increasingly more interest in modern communication technology, because they allow for an increased amount of information to be transmitted and received. As a particular example, so-called DWDM (Dense Wavelength Division Multiplex) networks are of high interest in the still evolving optical communication technology.

Optical communication systems exploit the idea of modulating an optical carrier signal (a light beam having one or several carrier wavelengths) with the information to be transmitted. Typical modulation schemes include Amplitude Shift Keying (ASK) with Return-to-Zero (RZ) or with Non-Return-to-Zero (NRZ). However, phase modulations, such as Differential Phase Shift Keying (DPSK) and other modulation schemes are also of interest.

There are two basic concepts for modulating an optical carrier signal, i.e. a light beam. The first concept called direct modulation seeks to modulate the light beam at the source where it is created. In other words, the laser itself generating the light beam is modulated. An alternative concept, which generally provides a higher signal quality, uses external modulators that modulate a continuous light beam provided from a separate laser source, for instance. Again, several concepts are known for the latter kind of external modulators which concepts include electro-absorption modulators and Mach-Zehnder modulators. The former exploit a physical effect within a semiconductor structure, which effect absorbs portions of the incoming light beam as a function of an electrical modulation signal applied. The latter use interference to modulate the light beam as a function of the electrical modulation signal.

While the basic concepts are generally known to those skilled in the art, electro-optical modulating devices face a plurality of difficulties and limitations in practical implementations, at least in scenarios where a very "quick" modulation is desired for achieving high bit rates in the communication system. WO 00/22477 discloses an electro-absorption modulator having a wave guide core as modulation area, the width of the wave guide core is varying along the length in order to compensate for temperature gradients along the core and problems associated therewith.

US 5,930,022 discloses an electro-absorption modulator having a variable impedance circuit arranged in parallel to the modulation structure for compensating impedance variations during operation. The variable impedance is connected to a driving unit applying the pulsed driving voltage (which corresponds to the electrical modulation signal within the meaning of the present application) to the modulation structure.

US 6,100,543 discloses an electro-absorption modulator having a so-called quantum well structure, wherein the energy level in the modulation area is configured to vary in order to attain a higher extinction ratio.

All of the above concepts seek to enhance the signal quality and signal characteristics of the output modulated optical signal. The extinction ratio, i.e. the ratio between "light on" and "light off", and the slew rate, i.e. the width of the transition zone between "light on" and "light off", are of particular interest in order to enable high data rates in optical communication systems.

US 2002/0018280 Al discloses an optical modulator, wherein one or two diodes are operatively connected to the supply path of the electrical modulation signal. The one or two diodes are connected to the electro-optical modulation structure by means of bonding wires or by mounting a high-frequency circuit substrate carrying the diodes in to the substrate of the electro-optical modulation structure a flip-chip bonding technique. The latter implementation is specifically intended in order to avoid impedance mismatching between the diodes and the modulating element. The features of the preamble of claim 1 are known from that document.

In view of the above, it is an object of the present invention to provide a further concept for enhancing the signal quality at the output of an electro-optical modulation element. In particular, it is desired to provide an electro-optical element for generating an amplitude-modulated optical signal having pulses with high slew rates and a high extinction ratio even at high bit rates of 40 Gbit/s and beyond.

According to one aspect of the invention, this object is achieved by an electro-optical element as mentioned at the outset, wherein the limiter is directly implemented on the same substrate as the modulation area.

The new approach provides an enhanced signal quality, in particular with respect to the extinction ratio and the bit rate achievable, and it additionally provides an increased flexibility enabling new applications beyond mere amplitude modulation. Limiting an electrical signal, i.e. clipping signal amplitudes exceeding a predefined threshold level, is generally known from conventional electrical circuit technology. In the context of the present invention, however, amplitude limiting is exploited to "accelerate" the transitions between high and low in the electrical modulation signal and thus also in the optical output signal. The advantages of the new approach become clear, if, for instance, a sine signal is considered as electrical modulation signal. Clipping the tops (the maximum peaks) of at least some sine periods eliminates signal parts having a "relatively flat" behavior, while the steeper signal parts at lower instantaneous values are maintained. In the frequency domain, limiting the signal (clipping) introduces harmonics which are multiples of the basic frequency of the sine signal. In any case, the modulation signal arriving at the modulation area is capable of effecting quicker on-off-transitions due to the higher frequencies contained or, in other words, due to the elimination of the flat behavior areas, thereby providing increases slew rates in modulated optical signals at the output. In technical terms, the increased signal quality is achieved by exploiting the non-linear effects of a non-linear element, i.e. the limiter, in the supply path of the electro-optical element.

In order to exploit the inventive concept more efficiently, it is preferred to drive the new electro-optical element with an electrical modulation signal having higher amplitudes than previously required, wherein the limiter limits the amplitude peaks of the electrical modulation signal to a level commonly known and used in the art. Due to the effects discussed above, the extinction ratio in the output optical signal is enhanced.

According to another aspect of the invention, it is highly advantageous that the limiter is arranged on the same substrate as the modulation area, thereby minimizing, if not eliminating, undesired side effects, which could otherwise be caused due to the RF behavior of conductor lines etc. Eliminating these side effects further contributes to increase the signal quality at the output of the new electro-optical element.

The above object is thus perfectly achieved.

In a preferred refinement of the invention, the limiter is a two-sided element adapted to limit the electrical modulation signal both in the positive and in the negative direction.

This refinement allows to drive the new electro-optical elements with a simple sine or cosine signal. Additionally, a two-sided limiter allows to exploit the steepest parts in the slope of the driving signal, thereby further increasing the signal quality at the output of the new electro-optical element. Moreover, a two-sided limiter increases the protection of the modulation area against destruction. With existing prior art elements, there has always been a risk of destroying the modulation area by providing too a high driving signal, in particular in forward direction. With a two-sided limiter according to this refinement, the new element is intrinsically protected against unintended overdriving.

In a further refinement of the invention, the limiter comprises a variable limiter threshold and at least one control input configured to receive a control signal for adapting the limiter threshold. In combination with the previous refinement, at least two control inputs and at least two variable limiter thresholds are preferred.

This refinement allows to individually tune the new element even during operation. Thus, an increased flexibility is achieved which enables new applications of the new element and method. For instance, it is a preferred new application to use the new element for (de-)multiplexing an optical time division multiplex signal, since the variable threshold in combination with the limited modulation signal allows a flexible control of the optical signals at the output of the element. Another preferred application is to use the new optical element for pulse-shaping, as will be explained later on.

In a further refinement of the invention, the limiter is configured to receive voltages which, if supplied without limiter, would destroy the modulation structure.

This refinement picks up an aspect already mentioned before, namely the intrinsic protection of the modulation structure due to the new limiter on the substrate. With this refinement, the protection is even further increased. Additionally, driving the new element with an electrical modulation signal exceeding prior art amplitude levels enables an even further increased extinction ratio due to the increasingly steep slopes of high amplitude signals.

In a further refinement, the new element further comprises an optical signal coupler and a plurality of combinations of the modulation structure and the limiter, wherein the plurality of combinations are connected to outputs of the optical signal coupler. A corresponding method involves combining a plurality of modulated optical signals into a common signal and/or distributing an incoming optical signal to a plurality of the combinations.

This refinement is particularly advantageous as a new concept for (de-)multiplexing optical TDM signals. In the context of the present invention, the term "coupler" means an element which might either act as a signal splitter or a signal combiner or both, if operated accordingly. The coupler might distribute an incoming optical TDM signal to the plurality of combinations, where individual channels of the TDM signal are (de-)multiplexed using the flexible switching characteristic of the new element and method. Furthermore, a plurality of modulated optical signals might be combined by the coupler to achieve a TDM signal. This refinement might advantageously be used in an Optical Add-Drop-Multiplexer (OADM), since the duty cycle of the optical attenuation is variable within wide limits due to the new concept.

In a further refinement, the electro-optical element further comprises a plurality of opto-electric transducers operatively connected to the plurality of combinations. Even more preferable, it further comprises a plurality of amplifiers operatively connected to the plurality of combinations.

In the context of the present invention the term "operatively connected" means that the respective components are connected to commonly establish a signal path. This includes scenarios where the respective components are not connected immediately to each other, but with other components interposed between. This refinement provides an electro-optical hybrid circuit configured to process a plurality of electrical communication signals carrying user data, for instance, into an optical communication system. It is even more preferred, if the above mentioned components are altogether integrated into a common substrate (monolithically or hybrid), thereby providing a new component for use in an optical communication system.

Due to its inherent characteristic providing flexible controlled modulation of optical signals with a high extinction ratio, the new approach is also highly advantageous in pulse-shaping applications, for instance as pulse generator for narrow or wide flat-top pulses, as required for RZ optical transmission, or as a pulse shaper for NRZ data modulation arranged in the optical signal path.

It goes without saying that the features mentioned above and those yet to be explained in the following may be used not only in the respectively stated combination, but also in other combinations or on their own, without departing from the scope of the present invention.

The invention will now be described in more detail with reference to the drawings, in which:
- Fig. 1: shows a (simplified) top view onto the new electrooptical element,
- Fig. 2: shows a (simplified) sectional view of the element of Fig. 1,
- Fig. 3: shows the element of Fig. 1 as an equivalent electrical circuit diagram,
- Fig. 4: shows an electrical modulation signal and threshold levels of the limiter in the element of Fig. 1 in a voltage versus time diagram,
- Fig. 5: shows a (simplified) block diagram of an electrooptical element including a plurality of combinations including limiters,
- Fig. 6: shows a (simplified) graph illustrating a TDM application in an optical power versus time diagram,
- Fig. 7: shows an application of the new element of Fig. 1 for re-timing in an optical power versus time diagram,, and
- Fig. 8: shows an application of the new element of Fig. 1 for pulse shaping in two optical power versus time diagrams.

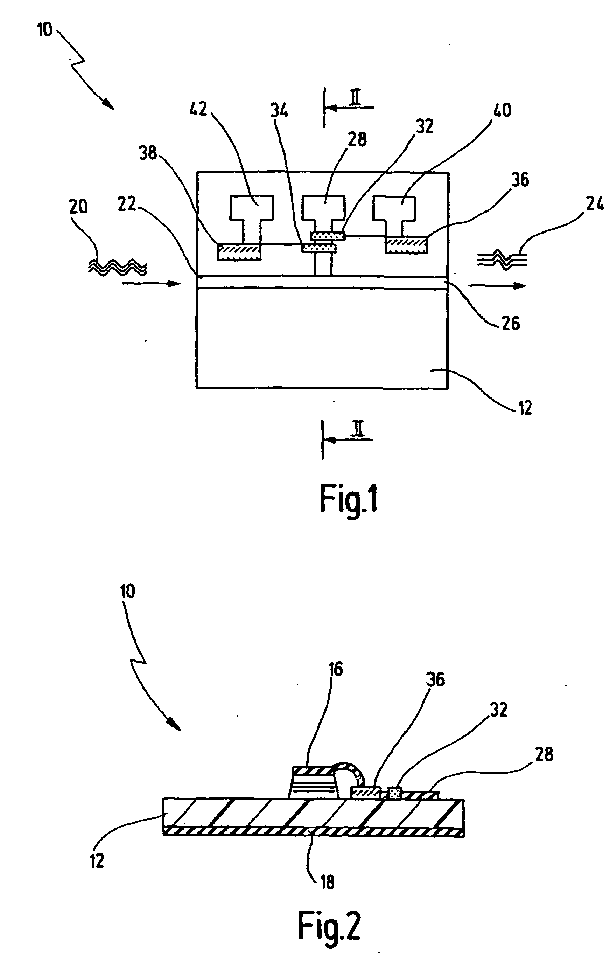

In Figures 1 to 3, a preferred embodiment of the new electro-optical element is designated by reference numeral 10 in its entirety.

Electro-optical element 10 comprises a substrate 12, a GaAs substrate for instance, on which a wave guide core 14 is arranged in a manner as it is known from electro-absorption modulators, for instance. The wave guide core 14 may be a multi-quantum well structure or a conventional semiconductor structure fabricated from InP or InGaAsP or the like. The wave guide core 14 is covered by an upper cladding layer 16, which might be fabricated from gold (Fig. 2). A lower cladding layer 18 fabricated from gold, for instance, is arranged underneath substrate 12. Cladding layers 16, 18 operate as electrodes providing an electrical field as a function of an electrical modulation signal, said electrical field modulating an (continuous) optical signal 20 entering the wave guide core 14 at a terminal 22. Optical signal 20 might be a light beam provided from a laser source, such as a DFB laser (Distributed Feedback Laser), as it is known to those skilled in the art. However, other sources for the optical signal 20 might also be envisaged.

At the other end of wave guide core 14, a modulated optical signal 24 is provided at an output terminal 26. Modulated optical signal 24 is typically an ASK modulated light beam, although other modulation formats are also within the scope of the present invention.

Reference numeral 28 designates a (second) input terminal for supplying an electrical modulation signal, as it is known from conventional electro absorption modulators, for instance. Terminal 28 connects (indirectly, as it is explained further below) to upper cladding layer 16 of wave guide core 14 for establishing the electrical field across wave guide core 14. However, it will be appreciated that terminal 28 could likewise be connected to lower cladding layer 18 depending on the specific characteristics of electro-optical element 10 in general and wave guide core 14 in particular.

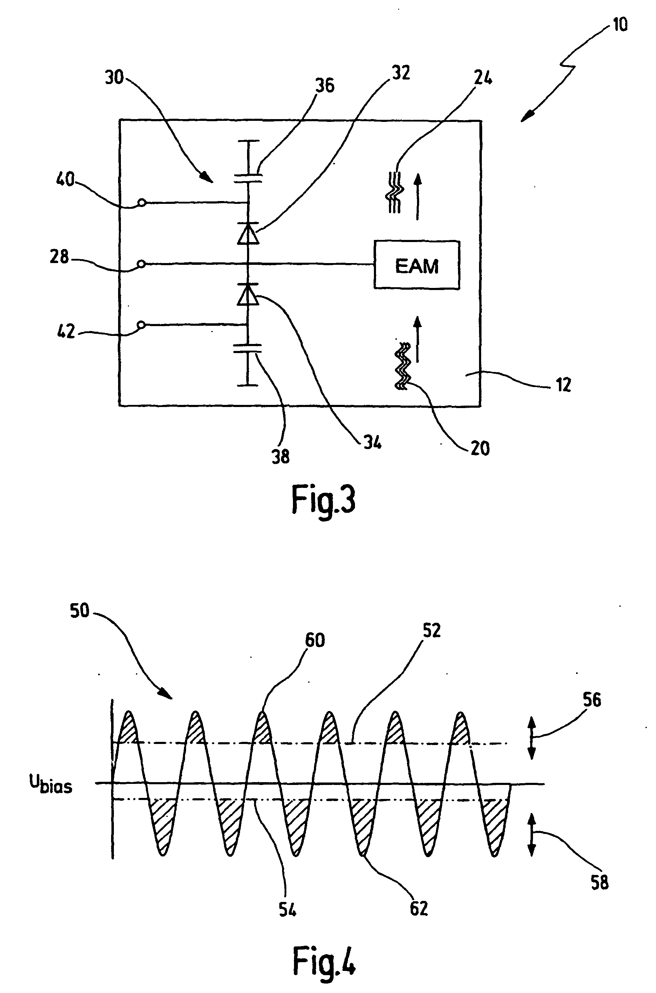

Between input terminal 28 and wave guide core 14, which acts as a modulation area here, there is provided a limiter, which is designated by reference numeral 30 shown in Fig. 3. Limiter 30 here comprises a first diode 32 and a second diode 34 as well as a first capacitor 36 and a second capacitor 38. Diodes 32, 34 and capacitors 36, 38 are directly implemented on substrate 12 in a manner known per se to those skilled in the art.

As can be seen from Fig. 3, diode 32 connects with its anode to terminal 28, while it connects to capacitor 36 with its cathode. Capacitor 36 is grounded with its second terminal facing away from diode 32. Diode 34 is likewise connected between terminal 28 and capacitor 38, but in reversed direction, i.e. its cathode is connected to terminal 28 and its anode is connected to capacitor 38. Capacitor 38 is likewise grounded with its second terminal facing away from diode 34.

According to the preferred embodiment, two further input terminals 40, 42 are provided, with input terminal 40 connecting between cathode of diode 32 and capacitor 36, and terminal 42 connecting between anode of diode 34 and capacitor 38. Thus, limiter 30 according to this embodiment is a two-sided limiter having two additional input terminals 40, 42 for providing variable limiter thresholds, as will be explained with reference to Fig. 4 further below.

Wave guide core 14 acting as modulation area is illustrated here as an electro absorption modulator, as it is known to those skilled in the art. However, it will be appreciated that the invention is not limited to this embodiment, although it is presently preferred due to its good results achieved so far.

Furthermore, it should be appreciated that limiter 30, as it is shown here in Fig. 3, is likewise a preferred embodiment only. Other concepts for amplitude limitation (clipping) of the electrical modulation signal might also be envisaged. Instead of diodes 32, 34, any other type of non-linear element including transistors might be used, and capacitors 36, 38 might be replaced by resistors, for instance.

Fig. 4 shows an electrical modulation signal 50 for driving electro-optical element 10 according to a preferred embodiment. Electrical modulation signal 50 is a sinoid voltage signal having amplitudes which are higher than previously required and allowed for common electro-absorption modulators. Furthermore, those skilled in the art will appreciate that electrical modulation signal 50 is an asymmetrical signal having a DC bias, as it is known from common electro-absorption modulators.

Reference numerals 52, 54 designate two threshold levels which are variable, as it is indicated by arrows 56, 58. Threshold levels 52, 54 can be adjusted by applying a suitable bias voltage to additional input terminals 40, 42, thereby adjusting the conduction voltage of diodes 32, 34. By properly adjusting threshold levels 52, 54, electrical modulation signal 50 can be "clipped" thereby suppressing the signal parts (peaks 60, 62) shown in shadings. The remaining (clipped) signal comprises a plurality of harmonics of the basic modulation signal 50, as it is known from conventional electrical circuit technology. On the other hand, it is readily to be seen that the clipped modulation signal 50 only comprises relatively steep slopes in combination with flat tops, which is desired in optical communication technology.

Furthermore, it will be appreciated by those skilled in the art, that the duty cycle and amplitude of limited modulation signal 50 can be varied by appropriately selecting threshold levels 56 and 58, and amplitude level and frequency of original modulation signal 50 as well. Thereby, the preferred limiter shown in Fig. 3 provides additional flexibility in driving optical element 10.

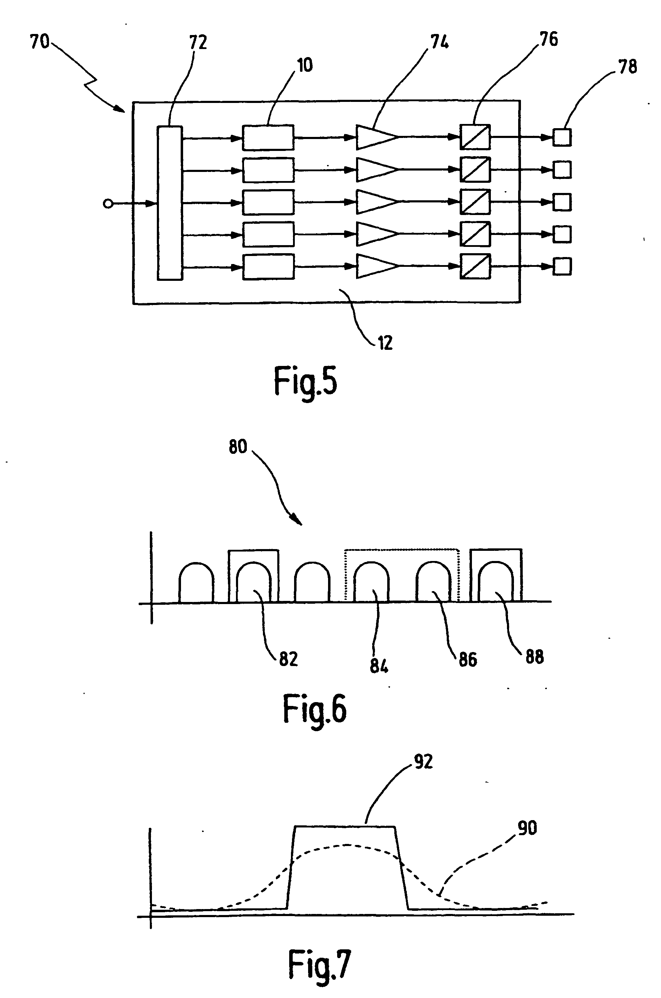

Fig. 5 shows a (de-)multiplexer 70 including a plurality of optical elements 10 as an exemplary embodiment for a preferred application of new element 10. Same reference numerals designate the same elements as before.

According to a preferred implementation, (de-)multiplexer 70 is implemented here on a single substrate 12 comprising a plurality of electro-optical elements 10. However, the elements of (de-)multiplexer 70 could likewise be located on several substrates. Furthermore, (de-)multiplexer 70 comprises a coupler 72 which might act as signal splitter or signal combiner depending on the direction of use. In Fig. 5, coupler 72 is shown as signal splitter distributing an incoming optical TDM signal (not shown here) to the plurality of optical elements 10. At the output of each optical element 10, there is arranged an optical amplifier 74 in each case. Optical amplifiers 74 are preferably implemented as Semiconductor Optical Amplifiers (SOA), as it is known to those skilled in the art. At the output of each optical amplifier 74, there is provided an opto-electric transducer 76 in each case. Transducers 76 convert the incoming optical signal into an electrical signal, as it is known to those skilled in the art. Additionally, transducers 76 also perform a (de-)modulation such that (de-)modulated message signals can be tapped off to a plurality of destinations 78 receiving the information.

In order to (de-)multiplex the incoming optical signal, the plurality of optical elements 10 are individually driven with suitable modulation signals which cause the desired channel of incoming TDM signals to be supplied to amplifier 74, while the non-desired communication channels are suppressed due to the attenuation in wave guide core 14.

As an exemplary embodiment, Fig. 6 shows a simplified representation of the optical TDM signal designated by reference numeral 80. TDM signal 80 comprises a plurality of time slots 82, 84, 86, 88 which might carry information signals from different sources and/or for different destinations. An optical element 10 of (de-)multiplexer 70 might select time slots 82 and 88 carrying parts of the same information signal, while it suppresses the remaining time slots. Due to the flexibility of optical element 10, however, several consecutive time slots 84, 86 might also be selected, if desired.

In a further application, optical element 10 might be used for re-timing, e.g. for refreshing an optical pulse that has suffered from dispersion or jitter, for instance. Such an application is schematically shown in Fig. 7, where reference numeral 90 designates an optical pulse that has "deformed" due to dispersion, while reference numeral 92 designates a re-timed pulse enabling a more accurate demodulation.

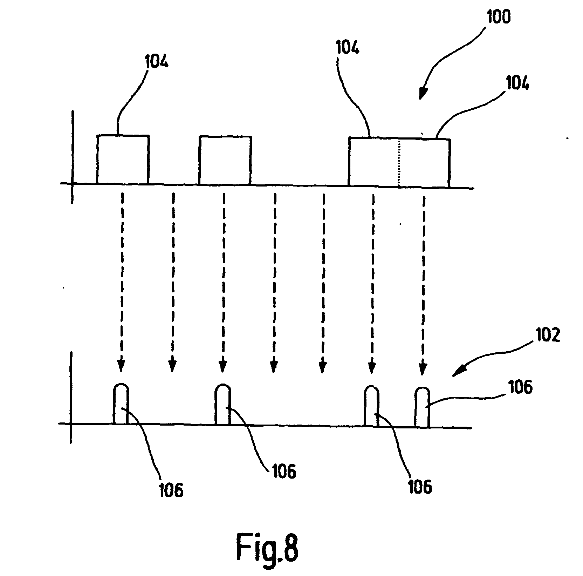

In yet another application, optical element 10 might be used for pulse shaping, such as for converting a NRZ modulated signal to a RZ modulated signal. Such an application is schematically shown in Fig. 8, where reference numeral 100 designates a NRZ modulated signal and reference numeral 102 designates a RZ modulated signal. The position of NRZ pulses 104 in signal 100 corresponds to the position of RZ pulses 106 in signal 102, but RZ pulses 106 have a rising or falling edge even in cases where another pulse of the same shape follows. In other words, RZ pulses 106 are narrower than NRZ pulses 104, which is achieved by a suitable control of new optical element 10.

## Claims

1. An electro-optical element for generating an amplitude-modulated optical signal (24), in particular an electro-absorption modulator, comprising:
- a semiconductor substrate (12),
- an electro-optical modulation structure arranged on the substrate (12) and having a first terminal (22) for supplying an optical signal (20) to be modulated, a second terminal (28) for supplying an electrical modulation signal (50), and a modulation area (14) adapted for modulating the optical signal (20) with the electrical modulation signal (50), and
- a limiter (30) for limiting the electrical modulation signal (50), said limiter (30) being operatively connected between the second terminal (28) and the modulation area (14),
**characterized in that** said limiter (30) is directly implemented on the same substrate (12) as the modulation area (14).

2. The electro-optical element of Claim 1, wherein the limiter (30) is a two-sided element adapted to limit the electrical modulation signal (50) both in the positive and in the negative direction.

3. The electro-optical element of Claim 1, wherein the limiter (30) comprises a variable limiter threshold (52, 54) and at least one control input (40, 42) configured to receive a control signal for adapting the limiter threshold (52, 54).

4. The electro-optical element of Claim 1, wherein the limiter (30) is configured to receive voltages which, if supplied without limiter (30), would destroy the modulation structure.

5. The electro-optical element of Claim 1, further comprising an optical signal coupler (72) and a plurality of combinations (10) of the modulation structure and the limiter, wherein the plurality of combinations are connected to outputs of the optical signal coupler (72).

6. The electro-optical element of Claim 5, further comprising a plurality of opto-electric transducers (76) operatively connected to the plurality of combinations (10), and, more preferably, a plurality of amplifiers (74) operatively connected to the plurality of combinations (10).

7. The electro-optical element of Claim 6, wherein at least the plurality of combinations (10) and the plurality of opto-electric transducers (76) are integrated on said substrate (12), preferably monolithically or in a hybrid assembly.

8. A use of the optical element (10) of Claim 1 for (de-) multiplexing an optical time division multiplex signal (80).

9. A use of the optical element (10) of Claim 1 for pulse-shaping an amplitude modulated optical signal.

10. A use of the optical element (10) of Claim 1 for re-timing an amplitude modulated optical signal.

11. An optical communication network having a plurality of network elements connected by optical communication links, wherein at least some of the network elements comprise an electro-optical element (10) according to any of Claims 1 to 7.

## Patentansprüche

1. Ein elektro-optisches Element zur Erzeugung eines amplitudenmodulierten optischen Signals (24), insbesondere eines Elektroabsorptionsmodulators, bestehend aus:
- einem Halbleiter-Substrat (12),
- einer auf dem Substrat (12) angeordneten elektro-optischen Modulationsstruktur mit einem ersten Anschluss (22) zur Lieferung eines optischen Signals (20), das moduliert werden soll, einem zweiten Anschluss (28) zur Lieferung eines elektrischen Modulationssignals (50) und einem Modulationabereich (14), der zur Modulation des optischen Signals (20) mit dem elektrischen Modulationssignal (50) geeignet ist, und
- einem Begrenzer (30) zur Begrenzung des elektrischen Modulationssignals (50), wobei der genannte Begrenzer (30) wirksam zwischen dem zweiten Anschluss (28) und dem Modulationsbereich (14) angeschlossen ist,
**dadurch gekennzeichnet, dass** der genannte Begrenzer (30) direkt auf dem gleichen Substrat (12) implementiert ist wie der Modulationsbereich (14).

2. Das elektro-optische Element gemäß Anspruch 1, wobei es sich bei dem Begrenzer (30) um ein zweiseitiges Element handelt, das in der Lage ist, das elektrische Modulationssignal (50) sowohl in positiver als auch in negativer Richtung zu begrenzen.

3. Das elektro-optische Element gemäß Anspruch 1, wobei der Begrenzer (30) einen variablen Begrenzer-Schwellenwert (52, 54) und mindestens einen Steuereingang (40, 42) umfasst, der entsprechend konfiguriert ist, um ein Steuersignal zur Anpassung des Begrenzer-Schwellenwerts (52, 54) zu empfangen.

4. Das elektro-optische Element gemäß Anspruch 1, wobei der Begrenzer (30) so konfiguriert ist, dass er Spannungen empfangen kann, die die Modulationsstruktur zerstören würden, wenn sie ohne Begrenzer (30) geliefert würden.

5. Das elektro-optische Element gemäß Anspruch 1, das außerdem einen optischen Signalkoppler (72) und eine Vielzahl an Kombinationen (10) aus Modulationsstruktur und Begrenzer umfasst, wobei die Vielzahl an Kombinationen mit den Ausgängen des optischen Signalkopplers (72) verbunden ist.

6. Das elektro-optische Element gemäß Anspruch 5, das außerdem eine Vielzahl an opto-elektrischen Wandlern (76) umfasst, die wirksam mit der Vielzahl an Kombinationen (10) verbunden sind, sowie vorzugsweise eine Vielzahl an Verstärkern (74), die wirksam mit der Vielzahl an Kombinationen (10) verbunden sind.

7. Das elektro-optische Element gemäß Anspruch 6, wobei zumindest die Vielzahl an Kombinationen (10) und die Vielzahl an opto-elektrischen Wandlern (76) auf dem genannten Substrat (12) integriert sind, und zwar vorzugsweise in einem monolithischen oder in einem Hybrid-Aufbau.

8. Eine Anwendung des optischen Elements (10) gemäß Anspruch 1 zum (De-)Multiplexing eines optischen Zeitmultiplexsignals (80).

9. Eine Anwendung des optischen Elements (10) gemäß Anspruch 1 zur Impulsformung eines amplitudenmodulierten optischen Signals.

10. Eine Anwendung eines optischen Elements (10) gemäß Anspruch 1 zum erneuten Timing eines amplitudenmodulierten optischen Signals.

11. Ein optisches Kommunikationsnetzwerk mit einer Vielzahl an Netzwerk-Elementen, die über optische Kommunikationsverbindungen angeschlossen sind, wobei mindestens einige der Netzwerkelemente ein elektro-optisches Element (10) gemäß einem der Ansprüche 1 bis 7 umfassen.

## Revendications

1. Elément électro-optique pour générer un signal optique modulé en amplitude (24), en particulier un modulateur électro-absorbant, comprenant :
- un substrat semi-conducteur (12),
- une structure de modulation électro-optique agencée sur le substrat et ayant une première borne (22) pour délivrer un signal optique (20) à moduler, une seconde borne (28) pour délivrer un signal de modulation électrique (50), et une zone de modulation (14) adaptée pour moduler le signal optique (20) en utilisant le signal de modulation électrique (50), et
- un limiteur (30) pour limiter le signal de modulation électrique (50), ledit limiteur (30) étant raccordé de manière opérationnelle entre la seconde borne (28) et la zone de modulation (14),
**caractérisé en ce que** ledit limiteur (30) est directement implanté sur le même substrat (12) que la zone de modulation (14).

2. Elément électro-optique selon la revendication 1, dans lequel le limiteur (30) est un élément bidirectionnel adapté pour limiter le signal de modulation électrique (50) dans les sens positif et négatif.

3. Elément électro-optique selon la revendication 1, dans lequel le limiteur (30) comprend un seuil de limiteur variable (52, 54) et au moins une entrée de commande (40, 42) configurée pour recevoir un signal de commande pour adapter le seuil de limiteur (52, 54).

4. Elément électro-optique selon la revendication 1, dans lequel le limiteur (30) est configuré pour recevoir des tensions qui, si elles étaient délivrées sans le limiteur (30), détruiraient la structure de modulation.

5. Elément électro-optique selon la revendication 1, comprenant également un coupleur de signal optique (72) et une pluralité de combinaisons (10) de la structure de modulation et du limiteur, dans lequel la pluralité de combinaisons est reliée à des sorties du coupleur de signal optique (72).

6. Elément électro-optique selon la revendication 5, comprenant de plus une pluralité de transducteurs opto-électriques (76) reliés de manière opérationnelle à la pluralité de combinaisons (10) et, de manière plus préférée, une pluralité d'amplificateurs (74) reliés de manière opérationnelle à la pluralité de combinaisons (10).

7. Elément électro-optique selon la revendication 6, dans lequel au moins la pluralité de combinaisons (10) et la pluralité de transducteurs opto-électriques (76) sont intégrées sur ledit substrat (12), de préférence de manière monolithique ou dans un assemblage hybride.

8. Utilisation de l'élément optique (10) selon la revendication 1 pour multiplexer (ou démultiplexer) un signal de multiplexage temporel optique (80).

9. Utilisation de l'élément optique (10) selon la revendication 1 pour mettre en forme d'impulsions un signal optique modulé en amplitude.

10. Utilisation de l'élément optique (10) selon la revendication 1 pour remettre en forme un signal optique modulé en amplitude.

11. Réseau de communication optique ayant une pluralité d'éléments de réseau reliés par l'intermédiaire de liaisons de communication optique, dans lequel au moins une partie des éléments de réseau comprend un élément électro-optique (10) selon l'une quelconque des revendications 1 à 7.
